# FASCICULE DE BREVET EUROPEEN

(11) **EP 0 442 803 B1**
(45) Date de publication et mention de la délivrance du brevet: **11.01.1995**
(21) Numéro de dépôt: 91400348.8
(22) Date de dépôt: 12.02.1991
(51) Int. Cl.: G21C 17/00, B23Q 9/00, B25B 11/00

(54) **Dispositif pour amener un outil sur une paroi**
Vorrichtung zum Anbringen eines Werkzeugs an einer Wand
Device for bringing a worktool onto a wall

(30) Priorité: 14.02.1990 FR 9001741
(43) Date de publication de la demande: 21.08.1991
(73) Titulaire: COMMISSARIAT A L'ENERGIE ATOMIQUE, 75015 Paris (FR)
(72) Inventeur: Debrus, Jean, F-30200 Bagnols sur Ceze (FR)
(74) Mandataire: Dubois-Chabert, Guy

(56) Documents cités:
- EP-A- 0 274 925
- WO-A-85/02360
- DE-A- 2 657 445
- DE-B- 2 655 179
- GB-A- 2 063 792
- US-A- 2 910 895
- US-A- 3 033 298

## Description

L'invention se rapporte à un dispositif pour amener un outil sur une paroi.

Quand la paroi se trouve dans une zone inaccessible, notamment dans les milieux hostiles des installations nucléaires, l'outil peut être disposé à l'extrémité d'un bras porté par un chariot télécommandé. Il est très difficile ou impossible de presser l'outil avec une force et une précision suffisantes sur la paroi par une simple action mécanique du bras. On peut améliorer de tels procédés en disposant des aimants qui viennent sur la paroi, autour de l'outil, mais ce système n'est pas utilisable avec des parois en matériau non magnétique. En outre, il s'adapte mal à des parois de rotondité variable ou inconnue avec précision comme les enveloppes de réservoirs.

On vise avec l'invention à résoudre ces problèmes. Le dispositif pour amener l'outil sur la paroi comprend une structure de maintien porteuse d'au moins une ventouse sur une face d'appui à la paroi ainsi qu'un vérin coulissant par rapport à la structure de maintien sous l'action d'un système de commande. Une butée permet par ailleurs de placer correctement la ventouse sur la paroi.

Si les ventouses peuvent être en nombre quelconque, une ventouse unique qui encercle le vérin est intéressante.

Un appareil analogue est décrit dans le brevet US-A-2 910 895, conformément au préambule de la revendication indépendante. Le dispositif selon l'invention est caractérisé en ce que: une extrémité du vérin qui peut sortir de la structure de maintien par la face d'appui porte l'outil; le dispositif est muni d'un joint d'étanchéité qui entoure l'outil et délimite une chambre de fluide d'interaction ainsi que d'un système de fourniture de fluide d'interaction qui comprend en particulier un conduit débouchant dans la chambre ; et en ce que la face d'appui est creusée d'une rigole entourant le joint d'étanchéité et aboutissant à un système d'aspiration du fluide d'interaction.

Il est avantageux de disposer la structure de maintien à l'extrémité d'un organe de manipulation par l'intermédiaire d'une liaison souple, qui peut être élastique ou autoriser des débattements.

Une autre solution consiste à commander cette orientation par un ensemble de télécommande comportant un ou plusieurs actionneurs (moteurs, vérins, etc.). De nombreux systèmes sont connus : robots, modèles réduits télécommandés, etc.)

L'invention va maintenant être décrite plus en détail à l'aide des figures suivantes données à titre illustratif et qui représentent une application particulière de l'invention :
- la figure 1 est une coupe centrale du dispositif ;
- la figure 2 est une vue de dessus du dispositif ;
- la figure 3 est une vue d'ensemble d'un système dans lequel est employé le dispositif ; et
- la figure 4 représente un accessoire du dispositif.

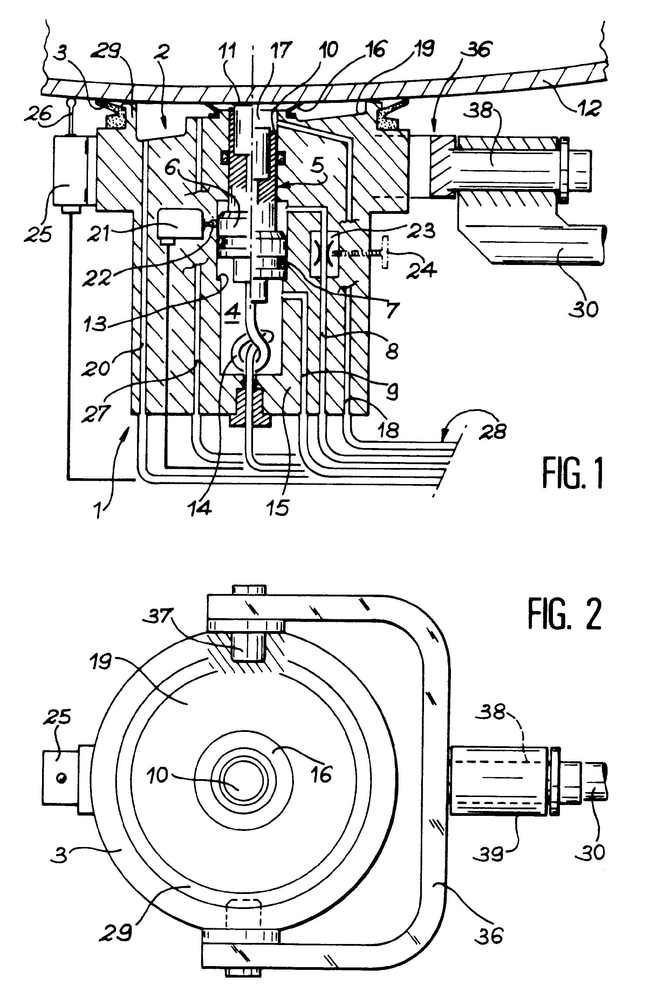

Le dispositif est représenté avant tout sur la figure 1. Il comprend donc une structure de maintien 1 de forme cylindrique dont une des extrémités, constituée par une face d'appui 2, porte un joint formant ventouse 3 circulaire autour d'une collerette 29 circulaire. La structure de maintien 1 est creuse et comprend une cavité 4 cylindrique dans laquelle coulisse un vérin 5 solidaire d'un piston 6 muni d'un joint d'étanchéité torique 7 de manière à séparer la cavité 4 en deux chambres. Deux canalisations de fluide d'alimentation établies dans la structure de maintien 1 et portant les références 8 et 9 aboutissent chacune dans une chambre. Par ailleurs, l'extrémité extérieure 10 du vérin 5 porte un outil 11.

En fonction des alimentations de fluide de commande à travers les canalisations 8 et 9, le vérin 5 peut se déplacer entre deux positions représentées sur les deux moitiés de la figure 1 : sur la moitié de gauche, le vérin 5 est en position sortie, où sa face d'extrémité 10 dépasse de la face d'appui 2 et plaque l'outil 11 sur la paroi 12 à traiter ou à examiner ; sur la moitié de droite, le vérin 5 est en position retirée et s'appuie sur un épaulement de butée 13 dans la cavité 4, ceci afin de préserver au fond de la cavité 4 un espace suffisant pour ne pas écraser un tube souple 14 utilisé pour la commande de l'outil 11 (ou pour en extraire des mesures) et qui peut par exemple contenir des fils électriques s'étendant de l'outil 11 à un tableau de commande extérieur en passant par l'intérieur du vérin 5, la cavité 4 et le fond 15 de la structure de maintien 1.

Il existe par ailleurs un joint d'étanchéité 16 porté par la face d'appui 2, entouré par la ventouse 3 et qui entoure la face d'extrémité 10 du vérin 5 et l'outil 11. La structure de maintien 1, le joint d'étanchéité 16, la paroi 12 et la face d'extrémité 10 délimitent ainsi une chambre de fluide d'interaction 17 dans laquelle débouche une canalisation de fluide d'interaction 18 qui s'étend à l'intérieur de la structure de maintien 1. Le fluide d'interaction peut être un électrolyte, un liquide de refroidissement ou de couplage ou d'une façon générale tout fluide adapté à réaliser une interaction correcte entre l'outil 11 et la paroi 12. Quand l'outil 11 est plaqué contre la paroi 12, la diminution de volume de la chambre de fluide d'interaction 17 peut provoquer le débordement de fluide d'interaction en excès hors du joint d'étanchéité 16. C'est pourquoi on a prévu sur le face d'appui 2 une rigole 19 qui entoure le joint d'étanchéité 16. Une canalisation d'évacuation 20 disposée à l'intérieur de la structure de maintien 1 débouche dans la rigole 19 et permet l'évacuation du liquide ayant débordé.

On trouve encore sur la structure de maintien 1 un capteur d'amenée d'outil 21 muni d'un doigt de palpage 22 qui dépasse dans la cavité 4 et qui est repoussé par le piston 6 quand celui-ci est déplacé vers l'extérieur, témoignant alors que l'outil 11 est bien amené contre la paroi 12 ; un étranglement 23 disposé sur une des canalisations de fluide d'alimentation 8 et qui permet de ralentir les déplacements du vérin 5 et d'amortir ainsi des chocs de l'outil 11 contre la paroi 12, l'étranglement 23 étant réglable grâce à une manette 24 qui dépasse de l'extérieur de la structure de maintien 1 ; et un capteur de positionnement 25 muni d'un doigt de palpage 26 qui s'appuie contre la paroi 12 quand la ventouse 3 est collée.

Une canalisation de vide 27 est disposée à l'intérieur de la structure de maintien 1 et débouche sur la face d'appui 2. Elle permet d'établir le vide dans la chambre délimitée par la paroi 12, la ventouse 3 et la face d'appui 2.

Des tubes de fluide qui aboutissent aux canalisations de fluide dont est percée la structure de maintien 1 et des tubes contenant des fils électriques qui aboutissent aux capteurs 21 et 25 ainsi qu'à l'outil 11 permettent de commander le dispositif. Ces différents tubes aboutissent généralement sous le fond 15 et sont regroupés en un cordon ombilical 28 à quelque distance de la structure de maintien 1.

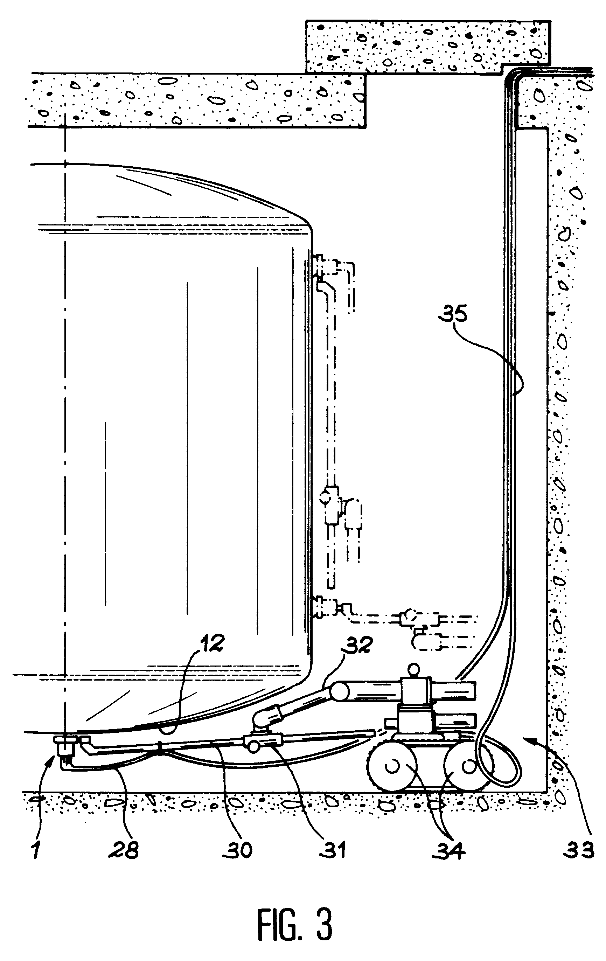

La figure 3 montre que la structure de maintien 1 est liée à l'extrémité d'une perche 30 munie d'une crémaillère et qui coulisse ainsi le long d'un poignet 31 d'un bras robotisé 32. Le bras robotisé 32 se compose de tronçons articulés les uns aux autres (de nombreux systèmes sont connus en soi) et il est accroché, à l'extrémité opposée au poignet 31, à un chariot 33 télécommandé et muni de roues 34. Le cordon ombilical 28 est accroché de manière lâche à la perche 30, au chariot 33 et se prolonge vers l'extérieur. Un second cordon ombilical 35 est utilisé pour la commande du chariot 33.

Un type de paroi 12 sur lequel il est intéressant d'utiliser l'invention est l'enveloppe d'un réservoir cylindrique à extrémités convexes. Il est impossible de connaître de l'extérieur avec une précision suffisante l'orientation et la rotondité de la partie du réservoir sur laquelle l'outil va être plaqué. La collerette 29 vient buter contre la paroi 12 et garantit ainsi un placement correct de la ventouse 3, après quoi le vide peut être commandé par la canalisation de vide 27.

La structure de maintien 1 est reliée à la perche 30 par une liaison qui permet de l'orienter correctement sur la paroi 12. Ce système, représenté à titre d'exemple figure 2, comprend essentiellement une chape 36 munie d'axes 37 perpendiculaires à la direction de déplacement du vérin 5 et autour desquels tourne la structure de maintien 1 ; par ailleurs, la chape 36 est munie d'un manche 38 qui tourne dans un palier 39 appartenant à la perche 30 autour d'un autre axe, perpendiculaire à la fois aux axes 37 précédents et à la direction de déplacement du vérin 5.

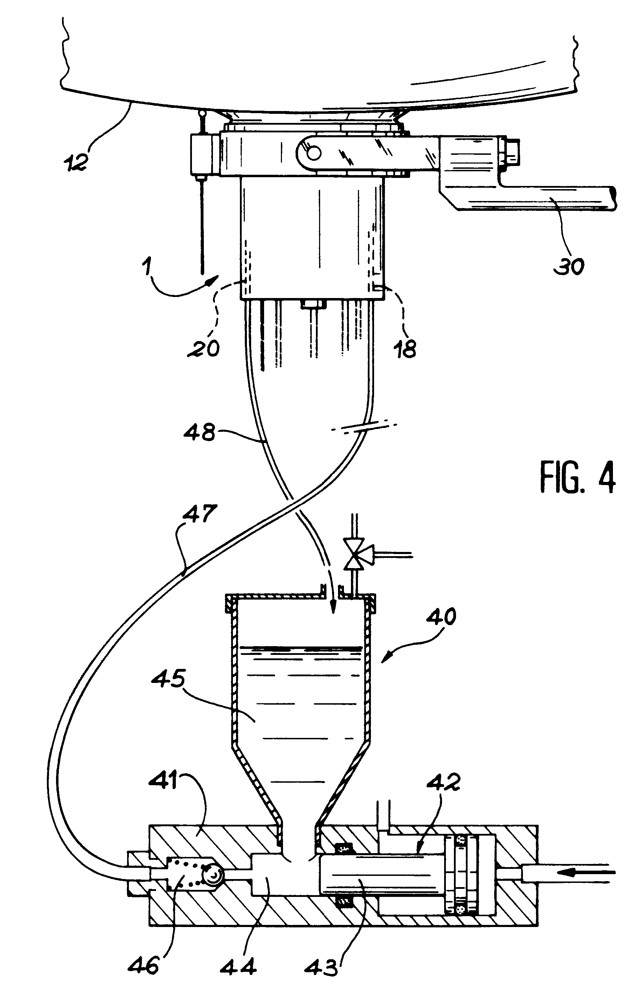

Le fluide d'interaction peut être fourni de l'extérieur par un doseur 40 (figure 4) composé d'une enveloppe 41 dans laquelle coulisse un piston 42 en sens alternatif sous l'action d'un fluide de commande. Une extrémité 43 du piston 42 se déplace dans une chambre de dosage 44 cylindrique qui communique avec un réservoir 45 de fluide d'interaction. La chambre de dosage 44 communique avec la canalisation de fluide d'interaction 18 par l'intermédiaire d'un clapet anti-retour 46 et d'un tube 47 du cordon ombilical 28. Quand le piston 42 est déplacé vers le clapet anti-retour 46 à partir de la position représentée, il interrompt la communication de la chambre de dosage 44 avec le réservoir 45 et repousse une quantité invariable de fluide de dosage vers le tube 47 après avoir repoussé la bille du clapet anti-retour 46.

Un autre tube 48 s'étend entre le réservoir 45 de fluide d'interaction et la canalisation d'évacuation 20 de fluide d'interaction pour en récupérer les quantités en excès.

L'outil 11 peut être, suivant le cas, une sonde pour le contrôle non destructif de la paroi 12, un capteur de nature quelconque, un moyen de traitement tel qu'une électrode d'usinage, et d'une façon générale un objet qu'il est utile d'amener à distance sur la paroi 12. La collerette 29 circulaire peut être remplacée par un autre profil de butée. La ventouse 3 unique peut être remplacée par plusieurs ventouses plus petites réparties sur la face d'appui 2.

## Revendications

1. Dispositif pour amener un outil (11) sur une paroi (12), comprenant une structure de maintien (1) porteuse d'au moins une ventouse (3) sur une face d'appui (2) à la paroi (12), une butée (29) sur la paroi (12) et un vérin (5) coulissant par rapport à la structure de maintien (1) sous l'action d'un système de commande (8, 9), caractérisé en ce qu'une extrémité (10) du vérin (5), pouvant sortir de la structure de maintien (1) par la face d'appui (2), porte l'outil (11), le dispositif comprend un joint d'étanchéité (16) entourant l'outil (11) et délimitant une chambre de fluide d'interaction (17) ainsi qu'un système de fourniture de fluide d'interaction comprenant en particulier un conduit (18) qui débouche dans la chambre de fluide d'interaction (17), et la face d'appui (2) est creusée d'une rigole (19) entourant le joint d'étanchéité (16) et aboutissant à un système d'aspiration (20) du fluide d'interaction.

2. Dispositif pour amener un outil suivant la revendication 1, caractérisé en ce que la ventouse (3) est unique et encercle le vérin (5).

3. Dispositif pour amener un outil suivant la revendication 1, caractérisé en ce qu'il comprend un appareil (40) de dosage de la quantité de fluide d'interaction fourni à la chambre de fluide d'interaction (17).

4. Dispositif pour amener un outil suivant l'une quelconque des revendications 1 à 3, caractérisé en ce qu'il comprend un capteur de distance (25) à la paroi (12) solidaire de la structure de maintien (1).

5. Dispositif pour amener un outil suivant l'une quelconque des revendications 1 à 3, caractérisé en ce que le système de commande (8,9) du vérin comprend un circuit de fluide de commande muni d'un amortisseur (23).

6. Dispositif pour amener un outil suivant l'une quelconque des revendications 1 à 4, caractérisé en ce que la structure de maintien (1) est fixée à un organe de manipulation (30) par une liaison souple (36 à 39).

## Patentansprüche

1. Vorrichtung zum Anbringen eines Werkzeugs (11) an einer Wand (12), umfassend eine Haltestruktur (1) mit wenigstens einen Balg (3) auf einer Auflageseite (2) an der Wand (12), einen Anschlag (29) an der Wand (12) und einen Zylinder (5), der bezüglich der Haltestruktur (1) unter der Wirkung eines Steuersystems (8, 9) gleitet,
**dadurch gekennzeichnet,** daß ein Ende (10) des Zylinders (5), das durch die Auflageseite (2) aus der Haltestruktur (1) austreten kann, das Werkzeug (11) trägt, die Vorrichtung eine Dichtung (16) umfaßt, die das Werkzeug (11) umgibt und eine Wechselwirkungs-Fluidkammer (17) begrenzt, sowie ein Wechselwirkungsfluid-Versorgungssystem, das insbesondere eine Leitung (18) umfaßt, die in die Wechselwirkungs-Fluidkammer (17) mündet, und die Auflageseite (2) versehen ist mit einer Rinne (19), die die Dichtung (16) umgibt und in einem Ansaugsystem (20) für Wechselwirkungsfluid endet.

2. Vorrichtung nach Anspruch 1, dadurch gekennzeichnet, daß ein einziger Balg (3) vorhanden ist und den Zylinder (5) umgibt.

3. Vorrichtung nach Anspruch 1, dadurch gekennzeichnet, daß sie ein Dosiergerät (40) der Wechselwirkungsfluidmenge umfaßt, die an die Wechselwirkungs-Fluidkammer (17) geliefert wird.

4. Vorrichtung nach einem der Ansprüche 1 bis 3, dadurch gekennzeichnet, daß sie einen Meßfühler (25) für den Abstand zur Wand (12) umfaßt, fest verbunden mit der Haltestruktur (1).

5. Vorrichtung nach einem der Ansprüche 1 bis 3, dadurch gekennzeichnet, daß das Steuersystem (8,9) des Zylinders einen Fluidsteuerkreis umfaßt, versehen mit einem Dämpfer bzw. einer Drossel (23).

6. Vorrichtung nach einem der Ansprüche 1 bis 4, dadurch gekennzeichnet, daß die Haltestruktur (1) an einem Betätigungsorgan (30) befestigt ist mittels einer biegsamen Verbindung (36 bis 39).

## Claims

1. Device for bringing a tool (11) onto a wall (12), having a holding structure (1) carrying at least one sucker (3) on a bearing face (2) on the wall (12), an abutment (29) on the wall (12) and a jack (5) sliding with respect to the holding structure (1) under the action of a control system (8, 9), characterized in that one end (10) of the jack (5), which can pass out of the holding structure (1) by the bearing face (2), carries the tool (11), the device comprises a packing (16) surrounding the tool (11) and defining an interaction fluid chamber (17), as well as an interaction fluid supply system having more particularly a pipe (18) issuing into the interaction fluid chamber (17), and the bearing face (2) has a channel (19) surrounding the packing (16) and leading to a suction system (20) for the interaction fluid.

2. Device for bringing a tool according to claim 1, characterized in that there is a single sucker (3) surrounding the jack (5).

3. Device for bringing a tool according to claim 1, characterized in that it comprises an apparatus (40) for dosing the interaction fluid quantity supplied to the interaction fluid chamber (17).

4. Device for bringing a tool according to any one of the claims 1 to 3, characterized in that it comprises a distance sensor (25) at the wall (12) integral with the holding structure (1).

5. Device for bringing a tool according to any one of the claims 1 to 3, characterized in that the jack control system (8, 9) comprises a control fluid circuit equipped with a damper (23).

6. Device for bringing a tool according to any one of the claims 1 to 4, characterized in that the holding structure (1) is fixed to a handling member (30) by a flexible link (36 to 39).
